# EUROPEAN PATENT APPLICATION

(11) **EP 4 773 546 A1**
(43) Date of publication of application: **08.07.2026**
(21) Application number: 24860533.9
(22) Date of filing: 29.08.2024
(51) Int. Cl.: H04L 9/40, H04L 5/00, H04W 12/037, H04W 12/106, H04W 12/04, H04W 84/12, H04L 1/00, H04W 4/06

(54) **METHOD AND APPARATUS FOR SUPPORTING PROTECTION OF CONTROL FRAME IN WIRELESS LAN SYSTEM**

(30) Priority: 31.08.2023 KR 20230115632; 31.08.2023 KR 20230115633; 06.09.2023 KR 20230118465; 06.09.2023 KR 20230118466
(71) Applicant: LG Electronics Inc., Yeongdeungpo-gu Seoul 07336 (KR)
(72) Inventor: BAEK, Sunhee, Seoul 06772 (KR); CHOI, Jinsoo, Seoul 06772 (KR); JANG, Insun, Seoul 06772 (KR); KIM, Geonhwan, Seoul 06772 (KR); YOON, Yelin, Seoul 06772 (KR); CHA, Dongju, Seoul 06772 (KR)
(74) Representative: Plasseraud IP
(86) International application number: PCT/KR2024/096103
(87) International publication number: WO 2025/048617

(57) **Abstract**

Disclosed are a method and an apparatus for supporting protection of a control frame in a wireless LAN system. The method performed by a first STA in a wireless local area network (WLAN) system, according to an embodiment of the present disclosure, may comprise the steps of: checking key information related to protection of a control frame; on the basis of a specific encryption protocol, receiving a control frame including encrypted information from a second STA; and on the basis of the key information, performing decryption on the encrypted information and integrity check on the control frame. Here, the encrypted information may be configured on the basis of encryption for any one of a common information field or a user information list field within the control frame.

## Description

### [Technical Field]

The present disclosure relates to a method and device for supporting protection for a control frame in a wireless local area network (WLAN) system.

### [Background]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11 ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device supporting protection for a control frame in a wireless LAN system.

The technical problem of the present disclosure is to provide a method and device for securing confidentiality and integrity based on Counter Mode with cipher-block chaining message authentication code protocol (CCMP)/Galois/Counter Mode protocol (GCMP) for a trigger frame in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless local area network (WLAN) system according to an aspect of the present disclosure may comprise: identifying key information related to protection of a control frame; receiving, from a second STA, a control frame including encrypted information based on a specific encryption protocol; and based on the key information, performing decryption of the encrypted information and integrity checking of the control frame. Herein, the encrypted information may be configured based on encryption of any one of a common information field and an user information list field within the control frame.

A method performed by a second station (STA) in a wireless local area network (WLAN) system according to an additional aspect of the present disclosure may comprise: identifying key information related to protection of a control frame; constructing a control frame including encrypted information based on the key information and a specific encryption protocol; and transmitting the control frame to a first STA, receiving from a second STA. Herein, the encrypted information may be configured based on encryption of any one of a common information field and an user information list field within the control frame.

### [Technical Effects]

According to various embodiments of the present disclosure, a method and device supporting protection for a control frame in a wireless LAN system may be provided.

According to various embodiments of the present disclosure, a method and device for securing confidentiality and integrity based on Counter Mode with cipher-block chaining message authentication code protocol (CCMP)/Galois/Counter Mode protocol (GCMP) for a trigger frame in a wireless LAN system can be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram showing an exemplary format of a trigger frame to which the present disclosure may be applied.
FIG. 9 illustrates a CCMP MPDU structure which may be applied to the present disclosure.
FIG. 10 illustrates a CCMP encryption encapsulation procedure which may be applied to the present disclosure.
FIG. 11 illustrates a CCMP decapsulation procedure which may be applied to the present disclosure.
FIG. 12 illustrates a GCMP MPDU structure which may be applied to the present disclosure.
FIG. 13 illustrates a GCMP encryption encapsulation procedure which may be applied to the present disclosure.
FIG. 14 illustrates a GCMP decapsulation procedure which may be applied to the present disclosure.
FIG. 15 illustrates an example of CCMP MPDU format according to an embodiment of the present disclosure.
FIG. 16 illustrates an example GCMP MPDU format according to an embodiment of the present disclosure.
FIG. 17 illustrates another CCMP MPDU format according to an embodiment of the present disclosure.
FIG. 18 illustrates another GCMP MPDU format according to an embodiment of the present disclosure.
FIG. 19 illustrates still another CCMP MPDU format according to an embodiment of the present disclosure.
FIG. 20 illustrates still another GCMP MPDU format according to an embodiment of the present disclosure.
FIG. 21 illustrates an operation of a transmitting STA supporting protection for a trigger frame according to the present disclosure.
FIG. 22 illustrates an operation of a receiving STA supporting protection for a trigger frame according to the present disclosure.
FIG. 23 is a diagram for explaining an example of a method performed by a first STA according to the present disclosure.
FIG. 24 is a diagram for explaining an example of a method performed by a second STA according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

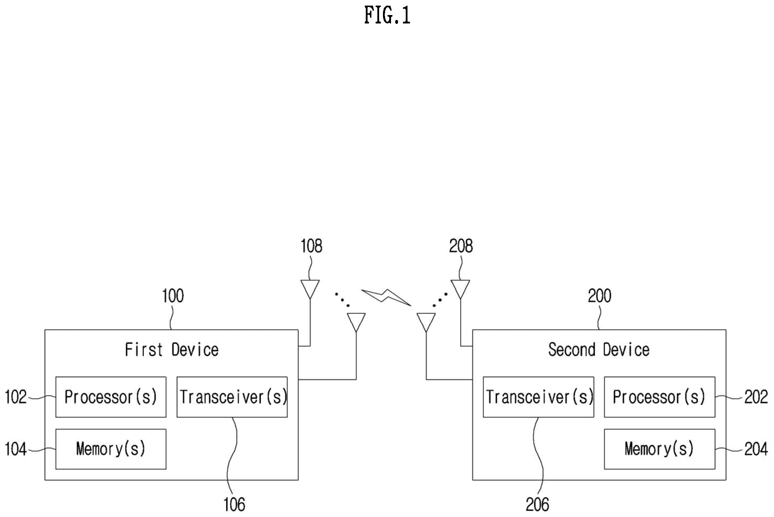

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

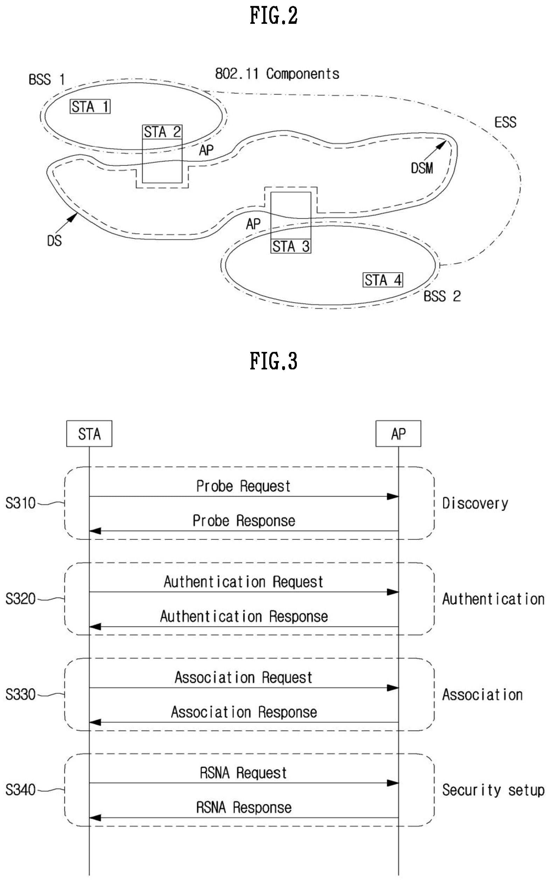

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

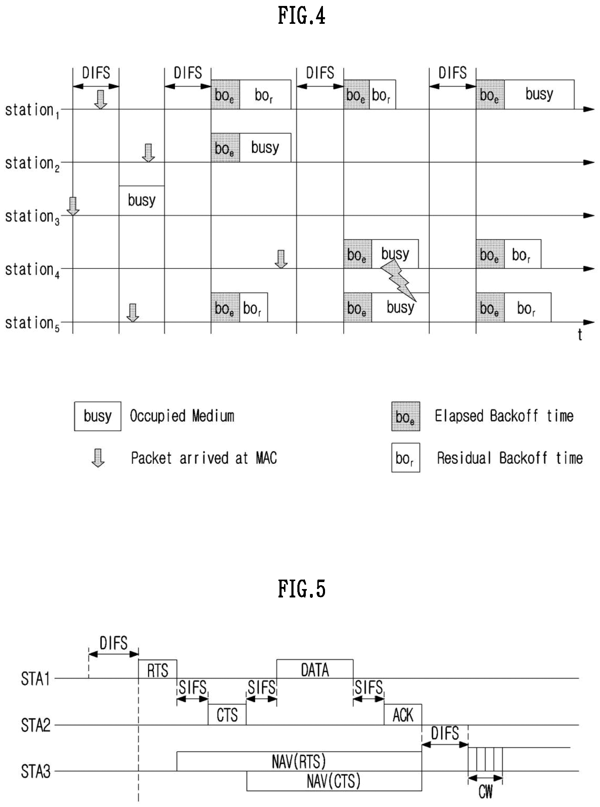

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining backoff time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

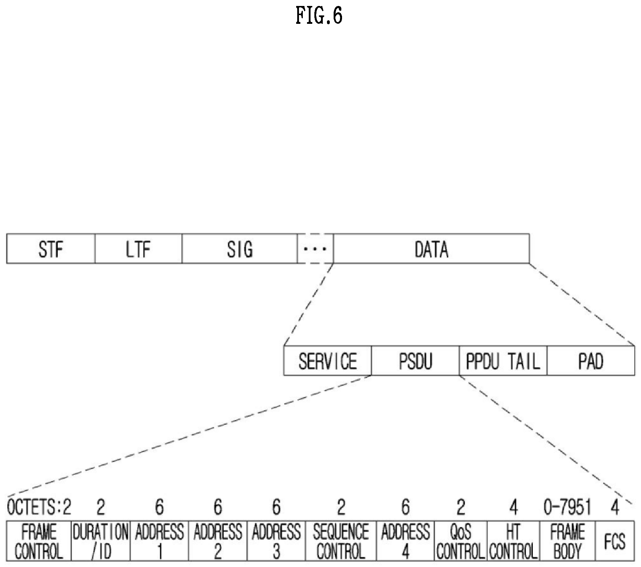

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

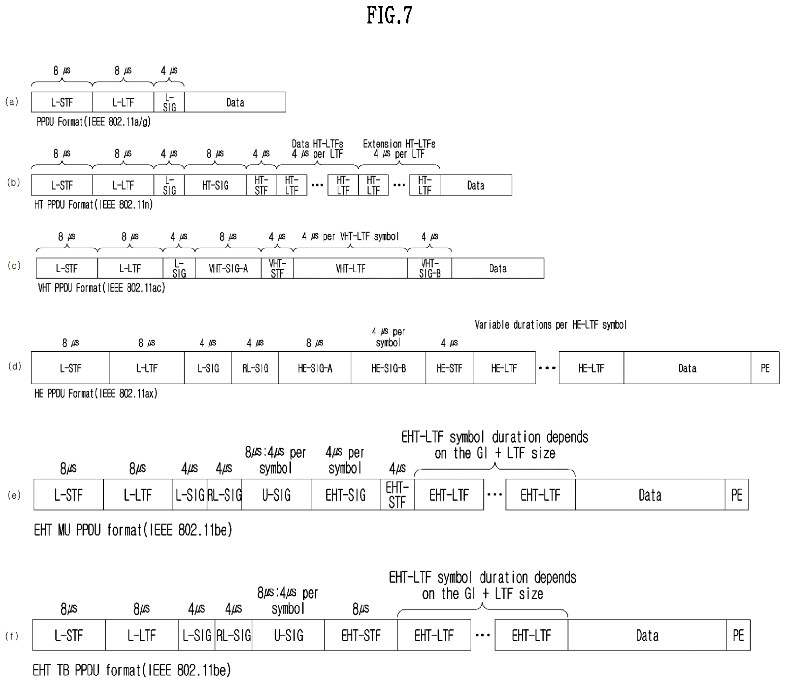

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.1 1n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Trigger frame

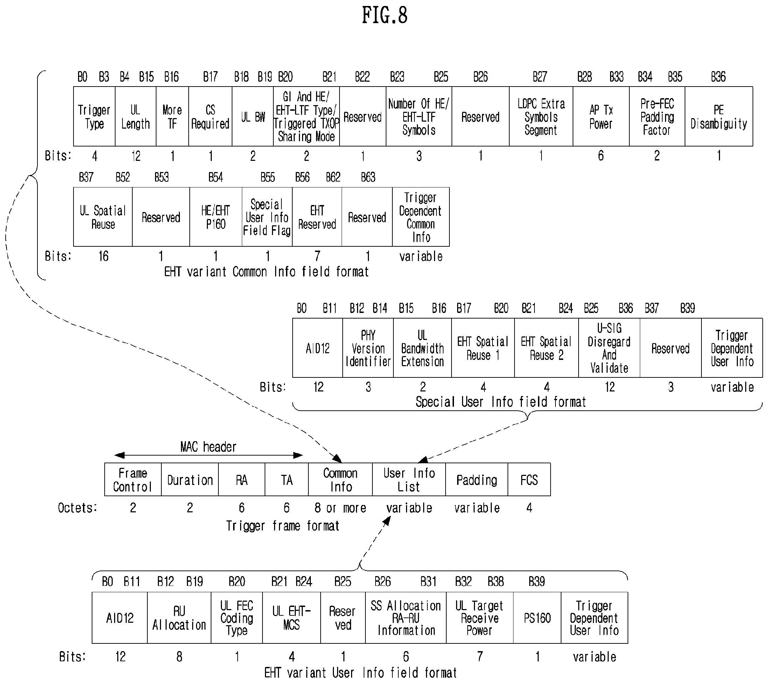

FIG.8 is a diagram illustrating an exemplary format of a trigger frame to which the present disclosure may be applied.

The trigger frame may allocate resources for transmission of one or more TB PPDUs and request transmission of TB PPDUs. The trigger frame may also include other information required by an STA transmitting a TB PPDU in response thereto. The trigger frame may include common information and a user information list field in the frame body.

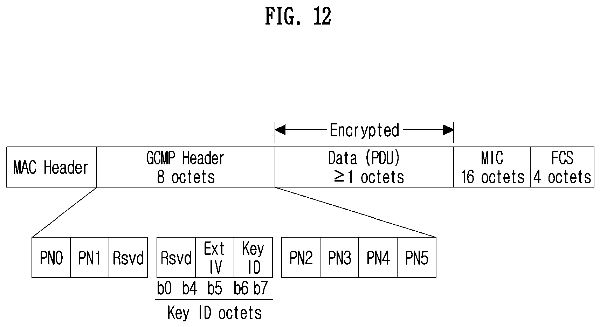

The common information field may include information that is common to one or more TB PPDU transmissions requested by a trigger frame, such as trigger type, UL length, presence of a subsequent trigger frame (e.g., More TF), whether CS (channel sensing) is required, UL BW (bandwidth), etc. Fig. 12 illustrates an example of an EHT variant common information field format.

A trigger type subfield of a 4-bit size may have a value of 0-15. Among them, 0, 1, 2, 3, 4, 5, 6 and 7, values of a trigger type subfield, are defined as corresponding to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and values of 8-15 are defined as being reserved.

Among the common information, a trigger dependent common information subfield may include information that is selectively included based on a trigger type.

A special user info field may be included within the trigger frame. The special user info field does not contain user-specific information, but rather includes extended common information not provided in the common information field.

A user information list includes at least 0 user information field. FIG. 12 illustratively shows an EHT variant user information field format.

An AID12 subfield basically represents that it is a user information field for a STA having a corresponding AID. In addition, when an AID12 field has a predetermined specific value, it may be utilized for other purposes such as allocating a random access (RA)-RU or being configured in the form of a special user information field. A special user information field is a user information field that does not include user-specific information but includes extended common information not provided in a common information field. For example, a special user information field may be identified by an AID12 value of 2007, and a special user information field flag subfield within a common information field may represent whether a special user information field is included.

A RU allocation subfield may represent the size and location of a RU/a MRU. For this purpose, a RU allocation subfield may be interpreted together with the PS160 (primary/secondary 160MHz) subfield of a user information field, the UL BW subfield of a common information field, etc.

For example, as shown in Table 1 below, the mapping of B7-B1 of a RU allocation subfield may be defined together with the settings of the B0 and PS160 subfields of a RU allocation subfield. Table 1 shows an example of encoding the PS160 subfield and the RU allocation subfield of an EHT variant user information field.

**[Table 1]**

| **PS160 subfield** | **B0 of the RU Allocation subfield** | **B7-B1 of the RU Allocation subfield** | **Bandwidth (MHz)** | **RU/MRU size** | **RU/MRU index** | **PHY RU/ MRU index** |
|---|---|---|---|---|---|---|
| 03: | | 0-8 | 20, 40, 80, 160, or 320 | 26 | RU1 to RU9, respectively | 37x*N*+RU index |
| 80 MHz segment where the RU is located | | | | | | |
| | | 9-17 | 40, 80, 160, or 320 | | RU10 to RU18, respectively | |
| | | 18 | 80, 160, or 320 | | Reserved | |
| | | 19-36 | 80, 160, or 320 | | RU20 to RU37 respectively | |
| | | 37-40 | 20, 40, 80, 160, or 320 | 52 | RUI to RU4, respectively | 16x*N*+ RU index |
| | | 41-44 | 40, 80, 160, or 320 | | RU5 to RU8, respectively | |
| | | 45-52 | 80, 160, or 320 | | RU9 to RU16, respectively | |
| | | 53, 54 | 20, 40, 80, 160, or 320 | 106 | RUI and RU2, respectively | 8xN+ RU index |
| | | 55, 56 | 40, 80, 160, or 320 | | RU3 and RU4, respectively | |
| | | 57-60 | 80, 160, or 320 | | RU5 to RU8, respectively | |
| | | 61 | 20, 40, 80, 160, or 320 | 242 | RU1 | 4x*N*+ RU index |
| | | 62 | 40, 80, 160, or 320 | | RU2 | |
| | | 63.64 | 80, 160, or 320 | | RU3 and RU4, respectively | |
| | | 65 | 40, 80, 160, or 320 | 484 | RUI | 2×*N+* RU index |
| | | 66 | 80, 160, or 320 | | RU2 | |
| | | 67 | 80, 160, or 320 | 996 | RUI | *N*+ RU index |
| | | | | | | |
| 0-1: | 0 | 68 | Reserved | | | Reserved |
| 160 MHz segment where the RU is located | 1 | | 160 or 320 | 2×996 | RUI | X1 - RU |
| 0 | 0 | 69 | Reserved | | | Reserved |
| 0 | 1 | | | | | |
| 1 | 0 | | | | | |
| 1 | 1 | | 320 | 4×996 | RU1 | RU1 |
| 0-3: | | 70-72 | 20, 40, 80, 160, or 320 | 52+26 | MRU1 to MRU3, respectively | 12×*N*+ MRU index |
| 80 MHz segment where the RU is located | | | | | | |
| | | 73-75 | 40, 80, 160, or 320 | 52+26 | MRU4 to MRU6, respectively | |
| | | 76-81 | 80, 160, or 320 | 52+26 | MRU7 to MRU12, respectively | |
| | | 82, 83 | 20, 40, 80, 160, or 320 | 106+26 | MRU1 and MRU2, respectively | 8×N+ MRU index |
| | | 84, 85 | 40, 80, 160, or 320 | 106+26 | MRU3 and MRU4, respectively | |
| | | 86-89 | 80, 160, or 320 | 106+26 | MRU5 to MRU8, respectively | |
| | | 90-93 | 80, 160, or 320 | 484+242 | MRU1 to MRU4, respectively | 4×*N+* MRU index |
| 0-1: 160 MHz segment where the MRU is located | 0 | 94.95 | 160 or 320 | 996+484 | MRU1 and MRU2, respectively | 4×X1 + MRU index |
| | 1 | | | | MRU3 and MRU4, respectively | |
| 0-1: 160 MHz segment where the MRU is located | 0 | 96-99 | 160 or 320 | 996+484+ 242 | MRU1 to MRU4, respectively | 8×X1 + MRU index |
| | 1 | | | | MRU5 to MRU8, respectively | |
| 0 | 0 | 100-103 | 320 | 2×996 +484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3x996 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3×996 1484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any | Reserved | Reserved | Reserved |

When B0 of a RU allocation subfield is set as 0, it may represent that RU/MRU allocation is applied to a primary 80MHz channel, and when its value is set as 1, it may represent that RU allocation is applied to the secondary 80MHz channel of primary 160MHz. When B0 of a RU allocation subfield is set as 0, it may represent that RU/MRU allocation is applied to the lower 80MHz of secondary 160MHz, and when its value is set as 1, it may represent that RU allocation is applied to the upper 80MHz of secondary 160MHz.

In the trigger frame RU allocation table of Table 1, parameter N may be calculated based on the formula of N=2*X1+X0. For a bandwidth less than or equal to 80MHz, values of PS160, B0, X0 and X1 may be set as 0. For a 160MHz bandwidth and a 320MHz bandwidth, values of PS160, B0, X0 and X1 may be set as shown in Table 2. This configuration represents the absolute frequency order for primary and secondary 80MHz and 160MHz channels. The order from left to right represents the order from low frequency to high frequency. A primary 80MHz channel is indicated as P80, a secondary 80MHz channel is indicated as S80, and a secondary 160MHz channel is indicated as S160.

**[Table 2]**

| **Bandwidth (MHz)** | **Inputs** | | | **Outputs** | | |
|---|---|---|---|---|---|---|
| | **Configuration** | **PS160** | **B0** | **X0** | **X1** | **N** |
| 20/40/80 | [P80] | 0 | 0 | 0 | 0 | 0 |
| 160 | [P80 580] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

### Counter Mode with Cipher-Block Chaining Message Authentication Code Protocol (CCMP)

CCMP provides confidentiality, authentication, integrity, and replay protection for data.

CCMP is based on CCM of the AES encryption algorithm, and CCM combines CTR (Counter Mode) for data confidentiality and Cipher-Block Chaining Message Authentication Code (CBC-MAC) for authentication and integrity. Here, CCM may protect integrity for both an MPDU data field and selected portions of a MAC header (i.e., an IEEE 802.11 MPDU header). In this regard, AES processing used within CCMP may use AES based on a 128-bit key (CCMP-128) or a 256-bit key (CCMP-256).

In this regard, when CCMP is selected as a robust security network (RSN) pairwise cipher and management frame protection is negotiated, individually addressed robust management frames and group-addressed action frames may need to be protected by CCMP.

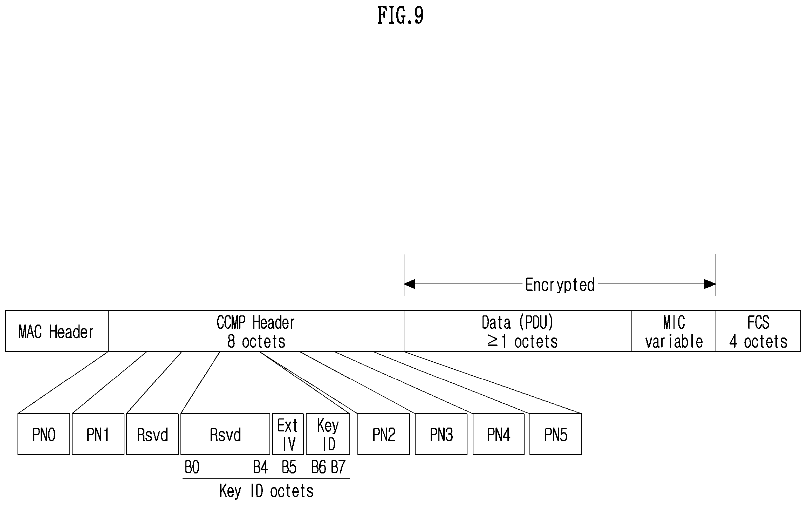

FIG. 9 illustrates a CCMP MPDU structure which may be applied to the present disclosure.

Referring to FIG. 9, a CCMP MPDU may include a MAC header, a CCMP header, a data (PDU) field, a MIC field, and an FCS field.

Specifically, the CCMP header may include PN information, Key ID information, and the like.

With respect to the CCMP MPDU, encryption may be applied to the data (PDU) field and the MIC field.

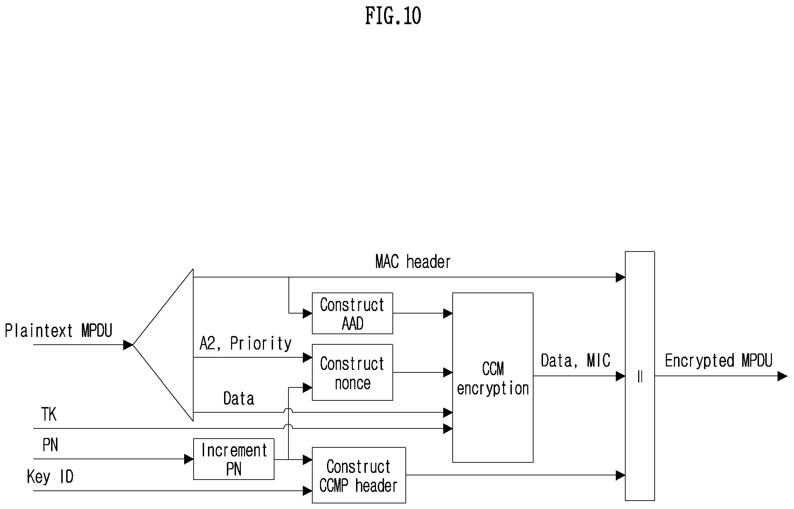

FIG. 10 illustrates a CCMP encryption encapsulation procedure which may be applied to the present disclosure.

Referring to FIG. 10, CCMP may encrypt a frame body field of a plaintext MPDU and encapsulate a resulting cipher text by using the following steps.
1) A packet number (PN) may be incremented so that a new non-zero PN may be obtained for each MPDU. Accordingly, the PN may not be repeated for the same temporal key.
2) Additional authenticated data (AAD) for CCM may be constructed by using fields of an MPDU header. The CCM algorithm may provide integrity protection for fields included in the AAD. An MPDU header field that may be changed upon retransmission may be set to a known value when the AAD is generated and may be masked out, thereby being muted.
3) A CCM nonce may be constructed from the PN, A2, and a priority value of the MPDU in which A2 is MPDU Address 2. When a Type field of a Frame Control field is 10 (i.e., a data frame) and a QoS Control field is present in the MPDU header, the priority value of the MPDU may be identical to a TID subfield value of the QoS Control field (e.g., bits 0-3 of the QoS Control field). When the Type field of the Frame Control field is 00 (i.e., a management frame) and the frame is a QMF, the priority value of the MPDU may be identical to a value in an ACI subfield of a Sequence Number field. Otherwise, the priority value of the MPDU may be a fixed value of 0.
4) A CCMP header may be constructed.
5) In order to generate a cipher text and an encrypted MIC, a temporal key, the AAD, the CCM nonce, and MPDU data may be used. This step may be referred to as CCM originator processing.
6) As illustrated in FIG. 9, a CCMP-based encrypted MPDU may be constructed by combining an original MPDU header (e.g., a MAC header), the CCMP header, encrypted data, and the encrypted MIC.

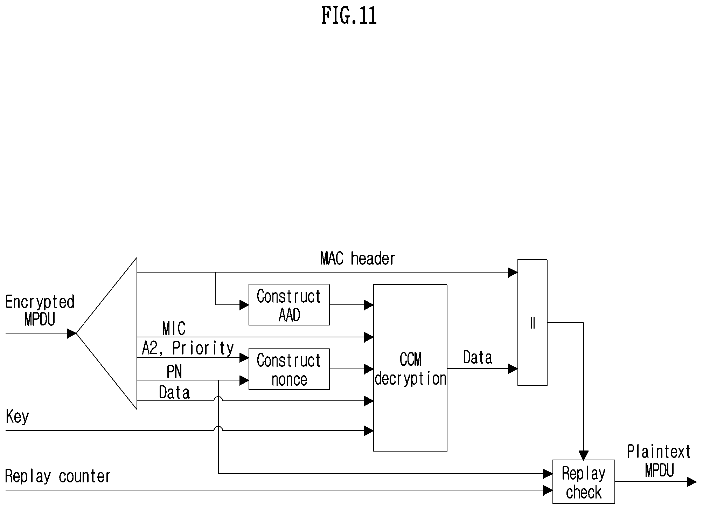

FIG. 11 illustrates a CCMP decapsulation procedure which may be applied to the present disclosure.

Referring to FIG. 11, CCMP may decrypt a frame body field of a cipher text MPDU and decapsulate a plaintext MPDU by using the following steps.
1) The encrypted MPDU may be parsed to construct AAD and a nonce value.
2) A MIC may be extracted for use in a CCM integrity check.
3) In CCM recipient processing, a temporal key, the AAD, the nonce, the encrypted MIC, and MPDU cipher text data may be used to recover MPDU plaintext data and to verify integrity of the AAD and the MPDU plaintext data.
4) A plaintext MPDU may be constructed by concatenating a received MPDU header and the MPDU plaintext data obtained from the CCM recipient processing.
5) The decryption processing may prevent replay of the MPDU by verifying whether a PN of the MPDU is greater than a replay counter maintained for a session and a TID (in the case of a data frame) or an ACI (in the case of a QMF).

With respect to the above-described CCMP-based encryption/decryption, the AAD may be constructed based on a MAC header (i.e., an original MPDU header).

### Galois/Counter Mode Protocol (GCMP)

GCMP provides confidentiality, authentication, integrity, and replay protection for data.

GCMP is based on GCM of the AES encryption algorithm, and GCM may protect integrity for both an MPDU data field and selected portions of a MAC header (i.e., an IEEE 802.11 MPDU header). In this regard, AES processing used within GCMP may use AES based on a 128-bit key (GCMP-128) or a 256-bit key (GCMP-256).

In this regard, when GCMP is selected as a robust security network (RSN) pairwise cipher and management frame protection is negotiated, individually addressed robust management frames and group-addressed action frames may need to be protected by GCMP.

FIG. 12 illustrates a GCMP MPDU structure which may be applied to the present disclosure.

Referring to FIG. 12, a GCMP MPDU may include a MAC header, a GCMP header, a data (PDU) field, a MIC field, and an FCS field.

Specifically, the GCMP header may include PN information, Key ID information, and the like.

With respect to the GCMP MPDU, encryption may be applied only to the data (PDU) field.

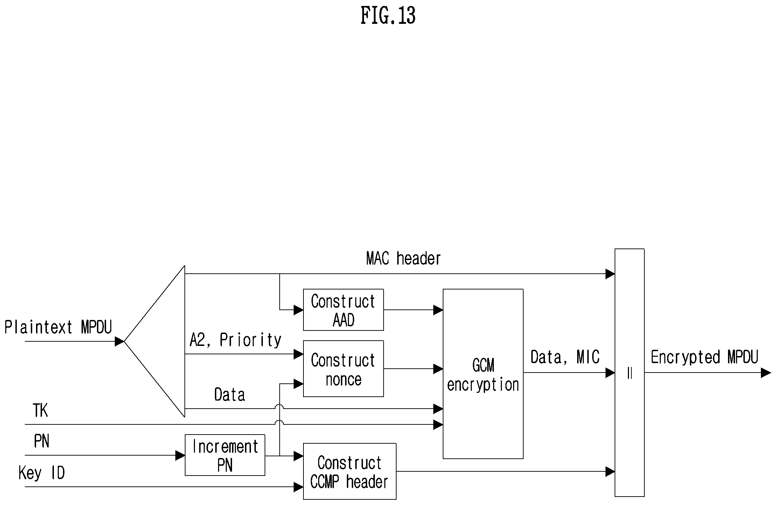

FIG. 13 illustrates a GCMP encryption encapsulation procedure which may be applied to the present disclosure.

Referring to FIG. 13, GCMP may encrypt a frame body field of a plaintext MPDU and encapsulate a resulting cipher text by using the following steps.
1) A packet number (PN) may be incremented so that a new non-zero PN may be obtained for each MPDU. Accordingly, the PN may not be repeated for the same temporal key.
2) Additional authenticated data (AAD) for GCM may be constructed by using fields of an MPDU header. The GCM algorithm may provide integrity protection for fields included in the AAD. An MPDU header field that may be changed upon retransmission may be set to a known value when the AAD is generated and may be masked out, thereby being muted.
3) A GCM nonce may be constructed.
4) A GCMP header may be constructed.
5) In order to generate a cipher text and a MIC, a temporal key, the AAD, the GCM nonce, and MPDU data may be used. This step may be referred to as GCM originator processing.
6) As illustrated in FIG. 12, a GCMP-based encrypted MPDU may be constructed by combining an original MPDU header (e.g., a MAC header), a GCMP header, encrypted data, and a MIC.

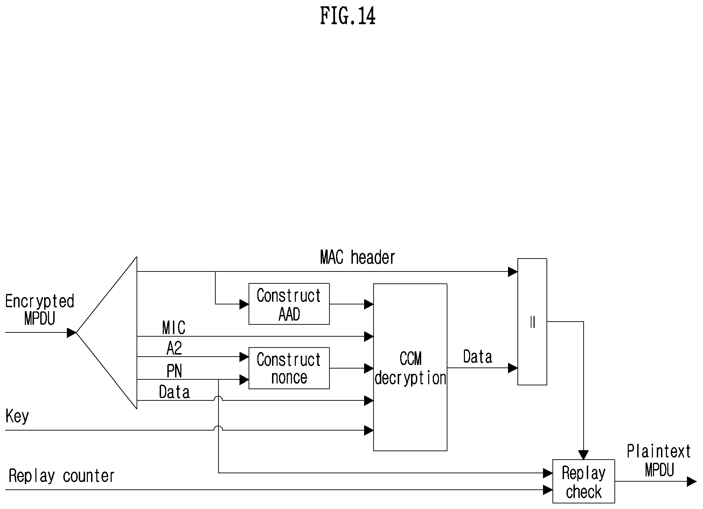

FIG. 14 illustrates a GCMP decapsulation procedure which may be applied to the present disclosure.

Referring to FIG. 14, GCMP may decrypt a frame body field of a cipher text MPDU and decapsulate a plaintext MPDU by using the following steps.
1) The encrypted MPDU may be parsed to construct AAD and a nonce value.
2) A MIC may be extracted for use in a GCM integrity check.
3) In GCM recipient processing, a temporal key, the AAD, the nonce, the MIC, and MPDU cipher text data may be used to recover MPDU plaintext data and to verify integrity of the AAD and the MPDU plaintext data.
4) A plaintext MPDU may be constructed by concatenating a received MPDU header and the MPDU plaintext data obtained from the GCM recipient processing.
5) The decryption processing may prevent replay of the MPDU by verifying whether a PN of the MPDU is greater than a replay counter maintained for a session and a TID (in the case of a data frame) or an ACI (in the case of a QMF).

With respect to the above-described GCMP-based encryption/decryption, the AAD may be constructed based on a MAC header (i.e., an original MPDU header).

### Method for supporting CCMP/GCMP-based protection for a control frame

In a conventional wireless LAN system, for individually addressed data frames (e.g., unicast-based data frames) and management frame(s), encryption/decryption based on Temporal Key Integrity Protocol (TKIP), CTR with CBC-MAC protocol (CCMP), or GCM Protocol (GCMP) may be performed/applied by using a pairwise transient key (PTK). In addition, for group addressed frames (e.g., broadcast-based data frames), encryption/decryption based on TKIP/CCMP/GCMP may be performed/applied by using a group temporal key (GTK). That is, CCMP/GCMP are security protocols that perform encryption/decryption, in which a TK based on a PTK may be used in a single-user (SU) case, and a TK based on a GTK may be used in a multi-user (MU) case. CCMP/GCMP may ensure confidentiality and integrity for data frames and management frame(s).

In addition, for group addressed management frame(s), a BIP-based integrity check may be performed by using an integrity group temporal key (IGTK). In particular, in the case of a beacon frame, a BIP-based integrity check may be performed by using a beacon integrity group temporal key (BIGTK). In the case of BIP, a TK based on an IGTK/BIGTK is used to generate a message integrity code (MIC) for a frame body of the corresponding data frame, and an integrity check based thereon may be performed. That is, BIP, unlike CCMP/GCMP, may ensure only integrity for data frames and management frame(s).

The method of constructing an MPDU based on CCMP and GCMP and the method of constructing a management MPDU (MMPDU) based on BIP have the following differences.

First, in the case of CCMP/GCMP, a transmitting STA performs encryption on a data portion by using CCM/GCM, transmits encrypted data, and a receiving STA may decrypt the received encrypted data. In contrast, in the case of BIP, a transmitting STA does not perform encryption on the data portion and may perform the corresponding protocol to generate a MIC for an integrity check of data in a frame body.

Next, in the case of CCMP/GCMP, an MPDU may be constructed and transmitted/received in an order of a MAC header, a CCMP/GCMP header, encrypted data, a MIC (an encrypted MIC in the case of CCMP), and an FCS. In contrast, in the case of BIP, the MPDU may be constructed and transmitted/received in an order of a MAC header, a management frame body including an MME (management MIC element), and an FCS. Herein, since the MME substitutes for a role of the CCMP/GCMP header, the MME may include information of a Key ID field, an IPN/BIPN, and a MIC.

As described above, protection is supported for data frames and management frames including beacon frames among group addressed frames. However, protection is not supported for control frames, and accordingly, control frames are transmitted and received in a state in which no protocol for encryption/decryption and/or integrity check is applied.

Among control frames, a trigger frame corresponds to a frame including information for allocating a specific RU and a specific bandwidth, etc., for data transmission and reception to and from a plurality of STAs. If information included in the trigger frame is exposed to a third STA (e.g., an attacking STA), data transmission and reception capability between a transmitting STA and a receiving STA may be degraded, or waste of power and/or medium may occur due thereto.

In consideration of the above, the present disclosure proposes a security technique for securing confidentiality and integrity of a trigger frame transmitted and received between a transmitting STA and a receiving STA.

Values/names proposed in the present disclosure may be changed, and the scope of the present disclosure is not limited thereto. In addition, the STA in the present disclosure may include a non-AP STA and an AP STA.

In addition, in the description of the present disclosure, it is assumed that all receiving STAs that receive a trigger frame according to the present disclosure transmitted by an AP, which is a transmitting STA, are UHR STAs (and/or beyond UHR STAs). That is, if a trigger frame configured according to the proposed method of the present disclosure is received by a pre-UHR STA (e.g., an EHT/HE STA, etc.), an error may occur during decoding of the corresponding trigger frame.

Additionally, although the present disclosure is described by taking, as a representative example, a security technique for a trigger frame among control frames, the proposed method of the present disclosure may be extended and applied to other types of control frames in addition to the trigger frame.

In the present disclosure, performing confidentiality and integrity checking for a trigger frame may be interpreted as applying CCMP/GCMP to the trigger frame in an extended manner. In this regard, with respect to previously defined CCMP/GCMP, provisions for a control frame may be additionally defined, or a separate protocol based on CCMP/GCMP for confidentiality and integrity checking of a control frame may be newly defined.

Hereinafter, methods for supporting/performing protection, that is, confidentiality and integrity checking, for a trigger frame will be described through specific examples.

### Embodiment 1

The present embodiment relates to a trigger frame construction scheme for supporting the above-described protection.

In this regard, a length of information (e.g., a Key ID, an IPN/BIPN, and a MIC) included in a CCMP/GCMP header and a MIC added to a cipher text (i.e., encrypted text) after application of CCMP/GCMP is not limited to previously defined values.

The present disclosure is not limited to that illustrated in FIG. 10. For example, in the case of a Key ID field, a Key ID indicating a GTK may have a length of 2 bits, whereas a Key ID indicating an IGTK or a BIGTK may have a length of 2 octets. In addition, in the case of a MIC field, the MIC field may have a length of 8 octets, 16 octets, 64 octets, or the like. Additionally, a length thereof may be changed by additionally applying a separate function to a MIC value.

A trigger frame for applying protection according to the present disclosure may be configured based on one or more of the formats described below.

### Embodiment 1-1

In order to support protection for a trigger frame, a format in which CCMP is applied to a common information field and a user information list field included in the trigger frame may be constructed.

The corresponding format may be for performing encryption/decryption on the common information field and user information list field(s) (i.e., one or more user information fields) within the trigger frame.

Specifically, a transmitting STA may perform CCMP encryption on a common information field and user information list field(s) by using a key negotiated/shared with a receiving STA. In the encryption process, additional authenticated data (AAD) may be constructed by using a Frame Control field, a Duration field, an RA (receiver address) field, and/or a TA (transmitter address) field, which are front portions of an MPDU format (e.g., an MPDU header or a MAC header).

In the case of CCMP, a MIC value calculated based on the common information field and the user information list field(s) is configured in a form of encrypted text along with the common information field and the user information list field(s).

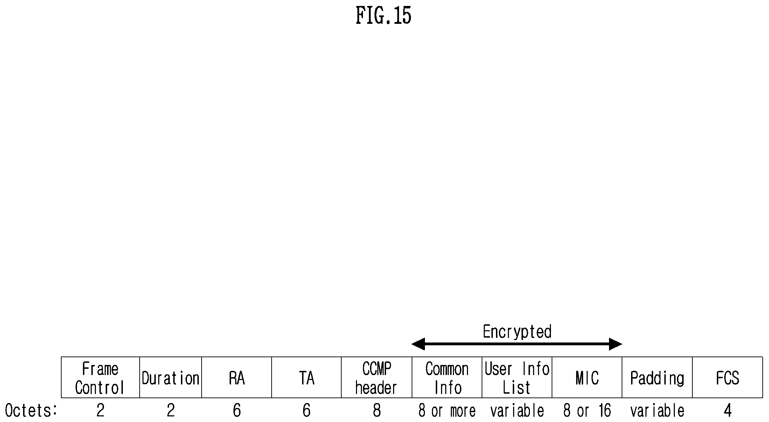

FIG. 15 illustrates an example of CCMP MPDU format according to an embodiment of the present disclosure.

Referring to FIG. 15, the CCMP MPDU format may be constructed in an order of a Frame Control field, a Duration field, an RA field, a TA field, a CCMP header field, encrypted text, padding, and an FCS. The construction is merely an example, and the scope of the present disclosure is not limited thereto.

In this regard, the CCMP header field may include information related to a packet number (PN) (e.g., PN0, PN1, PN2, PN3, PN4, PN5, and the like) and/or information regarding a Key ID.

As described above, when CCMP is applied, the common information field, the user information list field(s), and MIC information may be included in the corresponding CCMP MPDU format in a form of encrypted text. That is, CCMP-based encryption may be applied to an entire frame body of a trigger frame prior to encryption and to the MIC information.

### Embodiment 1-2

In order to support protection for a trigger frame, a format in which GCMP is applied to a common information field and a user information list field included in the trigger frame may be configured.

The corresponding format may be for performing encryption/decryption on the common information field and user information list field(s) (i.e., one or more user information fields) within the trigger frame.

Specifically, a transmitting STA may perform GCMP encryption on a common information field and user information list field(s) by using a key negotiated/shared with a receiving STA. In the encryption process, additional authenticated data (AAD) may be constructed by using a Frame Control field, a Duration field, an RA (receiver address) field, and/or a TA (transmitter address) field, which are front portions of an MPDU format (e,g,, an MPDU header or a MAC header).

In the case of GCMP, a MIC value calculated based on the common information field and the user information list field(s) is not encrypted, unlike the above-described case of CCMP.

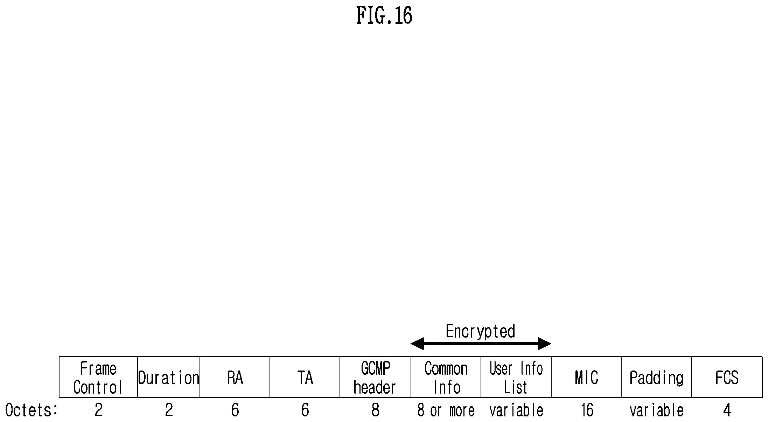

FIG. 16 illustrates an example of GCMP MPDU format according to an embodiment of the present disclosure.

Referring to FIG. 16, the GCMP MPDU format may be constructed in an order of a Frame Control field, a Duration field, an RA field, a TA field, a GCMP header field, encrypted text, a MIC field, padding, and an FCS. The construction is merely an example, and the scope of the present disclosure is not limited thereto.

In this regard, the GCMP header field may include information related to a packet number (PN) (e.g., PN0, PN1, PN2, PN3, PN4, PN5, and the like) and/or information regarding a Key ID.

As described above, when GCMP is applied, the common information field and the user information list field(s) may be included in the corresponding GCMP MPDU format in a form of encrypted text. That is, GCMP-based encryption may be applied to an entire frame body of a trigger frame prior to encryption.

### Embodiment 1-3

In supporting protection for a trigger frame, a format in which CCMP is applied to a common information field in the trigger frame may be configured.

The corresponding format may be for performing encryption/decryption on the common information field in the trigger frame.

Specifically, a transmitting STA may perform CCMP encryption on the common information field using a key negotiated/shared with a receiving STA. In the encryption process, additional authentication data (AAD) may be configured using a frame control field, a duration field, an RA (receiver address) field, and/or a TA (transmitter address) field, which are a front portion (e.g., an MPDU header or a MAC header) of an MPDU format.

In the case of CCMP, a MIC value calculated based on the common information field is configured in the form of an encrypted text together with the common information field.

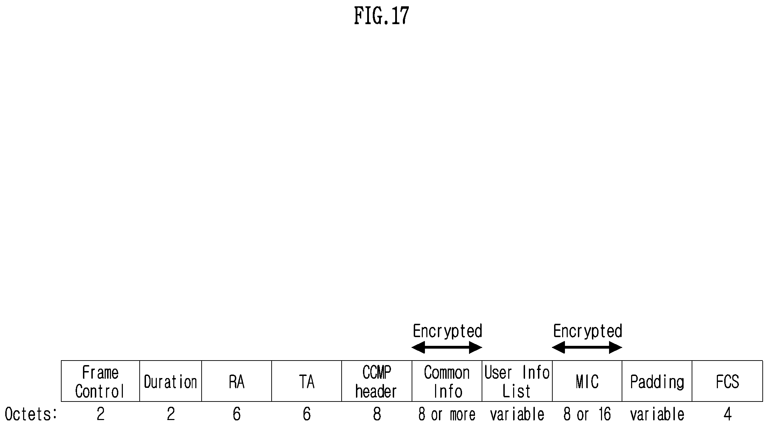

FIG. 17 illustrates another CCMP MPDU format according to an embodiment of the present disclosure.

Referring to FIG. 17, a CCMP MPDU format may be configured in the order of a frame control field, a duration field, an RA field, a TA field, a CCMP header field, a first encrypted text, a user information list field, a second encrypted text, padding, and an FCS. The corresponding configuration is merely an example, and the scope of the present disclosure is not limited thereto.

In this regard, the CCMP header field may include information on a packet number (PN)-related value (e.g., PN0, PN1, PN2, PN3, PN4, PN5, etc.) and/or a key ID.

As described above, when CCMP is applied, the common information field is included in the corresponding CCMP MPDU format in the form of an encrypted text (e.g., the first encrypted text), and the user information list field may be included in the corresponding CCMP MPDU format in the form of plain text. In addition, MIC information may be included in the corresponding CCMP MPDU format in the form of an encrypted text (e.g., the second encrypted text). That is, CCMP-based encryption may be applied to the common information field and the MIC information, which are a part of a frame body of a trigger frame before encryption.

### Embodiment 1-4

In supporting protection for a trigger frame, a format in which GCMP is applied to a common information field in the trigger frame may be configured.

The corresponding format may be for performing encryption/decryption on the common information field in the trigger frame.

Specifically, a transmitting STA may perform GCMP encryption on the common information field using a key negotiated/shared with a receiving STA. In the encryption process, additional authentication data (AAD) may be configured using a frame control field, a duration field, an RA (receiver address) field, and/or a TA (transmitter address) field, which are a front portion (e.g., an MPDU header or a MAC header) of an MPDU format.

In the case of GCMP, a MIC value calculated based on the common information field is not encrypted, unlike the above-described case of CCMP.

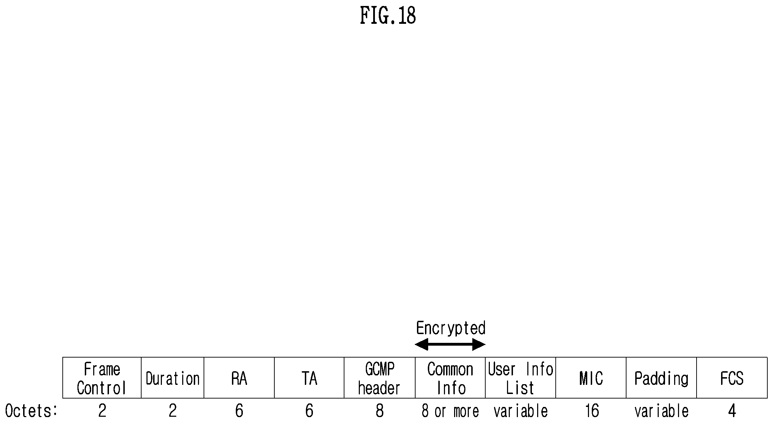

FIG. 18 illustrates another GCMP MPDU format according to an embodiment of the present disclosure.

Referring to FIG. 18, a GCMP MPDU format may be configured in the order of a frame control field, a duration field, an RA field, a TA field, a GCMP header field, an encrypted text, a user information list field, a MIC field, padding, and an FCS. The corresponding configuration is merely an example, and the scope of the present disclosure is not limited thereto.

In this regard, the GCMP header field may include information on a packet number (PN)-related value (e.g., PN0, PN1, PN2, PN3, PN4, PN5, etc.) and/or a key ID.

As described above, when GCMP is applied, the common information field is included in the corresponding GCMP MPDU format in the form of an encrypted text, and the user information list field and the MIC field may be included in the corresponding GCMP MPDU format in the form of plain text. That is, GCMP-based encryption may be applied to the common information field, which is a part of a frame body of a trigger frame before encryption.

### Embodiment 1-5

In supporting protection for a trigger frame, a format in which CCMP is applied to a user information list field (i.e., one or more user information fields) in the trigger frame may be configured.

The corresponding format may be for performing encryption/decryption on the user information list field in the trigger frame.

Specifically, a transmitting STA may perform CCMP encryption on the user information list field using a key negotiated/shared with a receiving STA. In the encryption process, additional authentication data (AAD) may be configured using a frame control field, a duration field, an RA (receiver address) field, and/or a TA (transmitter address) field, which are a front portion (e.g., an MPDU header or a MAC header) of an MPDU format.

In the case of CCMP, a MIC value calculated based on the user information list field is configured in the form of an encrypted text together with the user information list field.

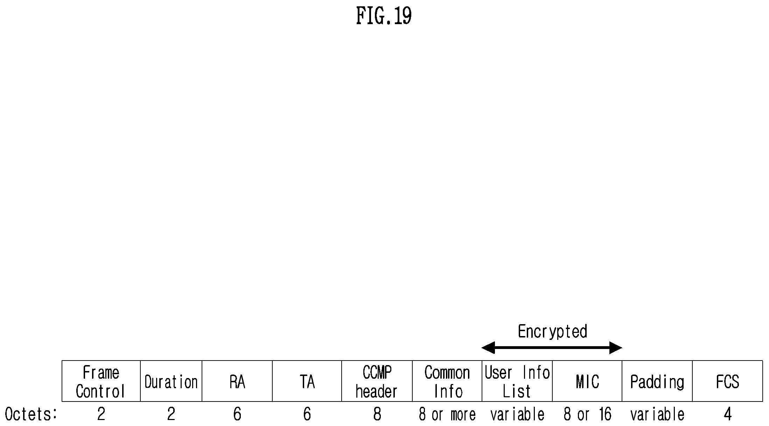

FIG. 19 illustrates still another CCMP MPDU format according to an embodiment of the present disclosure.

Referring to FIG. 19, a CCMP MPDU format may be configured in the order of a frame control field, a duration field, an RA field, a TA field, a CCMP header field, a common information field, an encrypted text, padding, and an FCS. The corresponding configuration is merely an example, and the scope of the present disclosure is not limited thereto.

In this regard, the CCMP header field may include information on a packet number (PN)-related value (e.g., PN0, PN1, PN2, PN3, PN4, PN5, etc.) and/or a key ID.

As described above, when CCMP is applied, the common information field is included in the corresponding CCMP MPDU format in the form of plain text, and the user information list field and the MIC field may be included in the corresponding CCMP MPDU format in the form of an encrypted text. That is, CCMP-based encryption may be applied to the user information list field and the MIC information, which are a part of a frame body of a trigger frame before encryption.

### Embodiment 1-6

In supporting protection for a trigger frame, a format in which GCMP is applied to a user information list field (i.e., one or more user information fields) in the trigger frame may be configured.

The corresponding format may be for performing encryption/decryption on the user information list field in the trigger frame.

Specifically, a transmitting STA may perform GCMP encryption on the user information list field using a key negotiated/shared with a receiving STA. In the encryption process, additional authentication data (AAD) may be configured using a frame control field, a duration field, an RA (receiver address) field, and/or a TA (transmitter address) field, which are a front portion (e.g., an MPDU header or a MAC header) of an MPDU format.

In the case of GCMP, a MIC value calculated based on the user information list field is not encrypted, unlike the above-described case of CCMP.

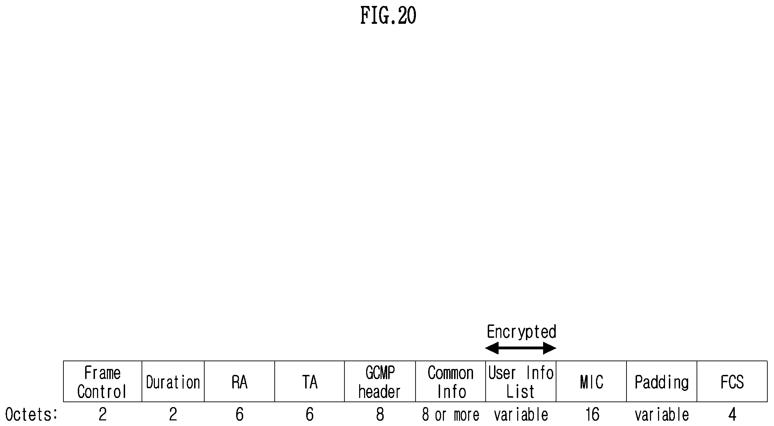

FIG. 20 illustrates still another GCMP MPDU format according to an embodiment of the present disclosure.

Referring to FIG. 20, a GCMP MPDU format may be configured in the order of a frame control field, a duration field, an RA field, a TA field, a GCMP header field, a common information field, an encrypted text, padding, and an FCS. The corresponding configuration is merely an example, and the scope of the present disclosure is not limited thereto.

In this regard, the GCMP header field may include information on a packet number (PN)-related value (e.g., PN0, PN1, PN2, PN3, PN4, PN5, etc.) and/or a key ID.

As described above, when GCMP is applied, the common information field is included in the GCMP MPDU format in the form of plain text, and the user information list field may be included in the corresponding GCMP MPDU format in the form of an encrypted text. In addition, the MIC field may be included in the corresponding GCMP MPDU format in the form of plain text. That is, GCMP-based encryption may be applied to the user information list field, which is a part of a frame body of a trigger frame before encryption.

Additionally, with respect to a trigger frame supporting protection according to the present disclosure, a transmitting STA and one or more receiving STAs may share information regarding whether encryption (i.e., CCMP- or GCMP-based encryption) for the trigger frame is supported. The information may be shared through a specific element (e.g., an Extended RSN element (RSNXE)) in a discovery procedure (e.g., a beacon frame, a probe response frame, or the like) and/or a (re)association procedure (e.g., a (re)association request frame, a (re)association response frame, or the like).

In this regard, whether application of CCMP or GCMP to a trigger frame is supported may be shared by using reserved bits within an existing element (e.g., an RSNXE) or by defining a new (sub)field within a new element. For example, a 1-bit protected trigger support (sub)field may be newly defined, and a value of 1 may indicate support for application of CCMP or GCMP to a trigger frame, and a value of 0 may indicate non-support for application of CCMP or GCMP to a trigger frame.

If both the transmitting STA and the receiving STA support encryption and support application of encryption to a trigger frame, the two STAs may perform application of encryption to the trigger frame. In contrast, if the transmitting STA and the receiving STA support encryption but do not support application of encryption to a trigger frame, the two STAs may not perform encryption for the trigger frame. Additionally, when encrypting the trigger frame, the transmitting STA and the receiving STA may identically use a cipher suite (e.g., CCMP-128, CCMP-256, GCMP-128, GCMP-256, or the like) negotiated in a negotiation. Alternatively, in order to encrypt the trigger frame, the transmitting STA and the receiving STA may negotiate an additional/separate cipher suite for the corresponding trigger frame.

Additionally or alternatively, in a legacy wireless LAN system, with respect to a trigger frame which is a type of control frame, a transmitting STA and a receiving STA do not perform encryption/decryption operations based on CCMP or GCMP. In this regard, a protected frame subfield of a Frame Control field within a MAC header is set to reserved in the case of a control frame.

In contrast, when the common information field and/or the user information list field of a trigger frame is encrypted/decrypted based on CCMP or GCMP according to the method proposed in the present disclosure, a value of a protected frame subfield in a Frame Control field of the corresponding trigger frame is set to 1. Based thereon, a receiving STA may recognize, through the value of the protected frame subfield, that the common information field and/or the user information list field in the corresponding trigger frame is encrypted. In this regard, when encrypting the trigger frame, a cipher suite (e.g., CCMP-128, CCMP-256, GCMP-128, GCMP-256, or the like) agreed upon by the transmitting STA and the receiving STA in a negotiation process may be identically used. Alternatively, in order to encrypt the trigger frame, the transmitting STA and the receiving STA may negotiate an additional/separate cipher suite for the corresponding trigger frame.

Additionally or alternatively, between the transmitting STA and the receiving STA, information regarding whether application of encryption (i.e., CCMP- or GCMP-based encryption) to a trigger frame is supported and regarding in which format a CCMP/GCMP MPDU format is configured among the schemes proposed in the present disclosure may be shared. In this regard, in order to share the information, reserved bits within an existing element (e.g., an RSNXE), reserved bits within a UHR variant common information field, and/or reserved bits within a special user information field may be used, or a new (sub)field (e.g., a protected trigger mode (sub)field) within a new element may be defined. In this case, as a method for encrypting/decrypting the trigger frame, the transmitting STA and the receiving STA may identically use a cipher suite (e.g., CCMP-128, CCMP-256, GCMP-128, GCMP-256, or the like) negotiated in a negotiation process, or may negotiate an additional/separate cipher suite for the trigger frame.

The corresponding (sub)field may be included in a beacon frame by a transmitting STA or included in a data frame by a receiving STA not only in a (re)association procedure but also in a data transmission/reception procedure. For example, when a value of a protected trigger mode (sub)field is set to 0, it may indicate that CCMP- or GCMP-based encryption is not applied to the corresponding trigger frame. In contrast, when the value of the protected trigger mode (sub)field is set to 1 or greater, it may indicate that CCMP- or GCMP-based encryption is applied to the trigger frame.

As a specific example, when the corresponding protected trigger mode (sub)field is set to a value of 1 or more, the value of the protected trigger mode (sub)field may be defined as shown in Table 3 below. Table 3 is illustrative, and at least one of the values described in Table 3 may be applied/defined, and specific values may be set/defined differently from the illustrated examples.

**[Table 3]**

| Value of Protected Trigger Mode (sub)field | Meaning |
|---|---|
| 0 | CCMP/GCMP is not applied to the trigger frame |
| 1 | Trigger frame configuration based on Embodiment 1-1 |
| 2 | Trigger frame configuration based on Embodiment 1-2 |
| 3 | Trigger frame configuration based on Embodiment 1-3 |
| 4 | Trigger frame configuration based on Embodiment 1-4 |
| 5 | Trigger frame configuration based on Embodiment 1-5 |
| 6 | Trigger frame configuration based on Embodiment 1-6 |
| ... | ... |

Additionally or alternatively, a reserved bit located at a front portion of Key ID information (i.e., a Key ID octet) within a CCMP header and/or a GCMP header may be used as a protected trigger mode (sub)field, such that information regarding whether application of encryption (i.e., CCMP- or GCMP-based encryption) to a trigger frame is supported and regarding in which format a CCMP/GCMP MPDU format is configured among the schemes proposed in the present disclosure may be shared. In this case, as a method for encrypting/decrypting the trigger frame, a transmitting STA and a receiving STA may identically use a cipher suite (e.g., CCMP-128, CCMP-256, GCMP-128, GCMP-256, or the like) negotiated in a negotiation process may be identically used, may negotiate an additional/separate cipher suite for the trigger frame.

The corresponding (sub)field may be included in a data frame transmitted by a transmitting STA to a receiving STA in a data transmission/reception procedure. For example, when a value of a protected trigger mode (sub)field is set to 0, it may indicate that CCMP- or GCMP-based encryption is not applied to the corresponding trigger frame. In contrast, when the value of the protected trigger mode (sub)field is set to 1 or greater, it may indicate that CCMP- or GCMP-based encryption is applied to the trigger frame.

As a specific example, when the protected trigger mode (sub)field is set to a value of 1 or greater, the value of the protected trigger mode (sub)field may be defined as shown in Table 4 below. Table 4 is merely exemplary, and at least one of the values described in Table 4 may be applied/defined, and specific values may be set/defined differently from the example.

**[Table 4]**

| Value of Protected Trigger Mode (sub)field | Meaning |
|---|---|
| 0 | CCMP/GCMP is not applied to a trigger frame |
| 1 | Configuration of a trigger frame based on Embodiment 1-1 |
| 2 | Configuration of a trigger frame based on Embodiment 1-2 |
| 3 | Configuration of a trigger frame based on Embodiment 1-3 |
| 4 | Configuration of a trigger frame based on Embodiment 1-4 |
| 5 | Configuration of a trigger frame based on Embodiment 1-5 |
| 6 | Configuration of a trigger frame based on Embodiment 1-6 |
| ... | ... |

### Embodiment 2

The present embodiment relates to a method for generating a MIC for CCMP/GCMP transmission/reception in association with application of encryption to the above-described trigger frame.

In the case of a trigger frame, a type of the trigger frame to be transmitted/received may be indicated according to a value of a trigger type subfield within a common information field. According to the indicated value, a receiving STA may determine whether the corresponding trigger frame is an individually addressed frame or a group addressed frame. In addition, the receiving STA may determine whether the corresponding trigger frame is an individually addressed frame or a group addressed frame based on information in an RA field within the trigger frame.

In this regard, when applying CCMP or GCMP to the trigger frame, a key used for calculation of a MIC value may be used differently depending on whether the frame is an individually addressed frame or a group addressed frame.

For example, in the case of an individually addressed data frame, MIC value calculation may be performed by using a TK based on a PTK that is identically generated between a transmitting STA and a receiving STA. On the other hand, in the case of a group addressed data frame, MIC value calculation may be performed by using a TK based on a GTK shared by the transmitting STA with the receiving STA.

In the case of legacy CCMP/GCMP (e.g., CCMP/GCMP applied to a data frame/management frame), it is not possible to use CCMP and GCMP based on an IGTK or a BIGTK. In contrast, in the present disclosure, it is assumed that CCMP and/or GCMP based on a PTK/GTK/IGTK/BIGTK may be used.

Hereinafter, a key usage scheme for calculating and verifying a MIC value for an individually addressed trigger frame and/or a group addressed trigger frame will be described in detail.

First, in the case of an individually addressed trigger frame, a MIC value may be calculated/checked as follows.

A transmitting STA and a receiving STA may calculate a MIC value by using a TK based on a PTK that is identically generated during a 4-way handshake process. For example, with respect to application of BIP to a trigger frame, the transmitting STA and the receiving STA may identically use a PTK generated for protection of a data frame during the 4-way handshake process, or may use a (new) PTK that is identically generated/negotiated/shared between them for protection of the corresponding trigger frame during the 4-way handshake process.

Alternatively, a transmitting STA and a receiving STA may calculate a MIC value by using a TK based on a new PTK for an individually addressed trigger frame that is shared during a 4-way handshake process. In this regard, the corresponding new PTK may be referred to as a Trigger PTK (TPTK), and the transmitting STA may generate and share a different TPTK for each receiving STA. That is, different TPTKs may be shared for receiving STA 1 and receiving STA 2. In addition, between the transmitting STA and the receiving STA, information on the TPTK and information related to a cipher suite that may use the corresponding TPTK may be shared through a new key data element (KDE) for the TPTK (for example, a TPTK KDE).

If a receiving STA recognizes/confirms a key for protecting a trigger frame (e.g., a TPTK) (and/or receives the corresponding key from the transmitting STA), the receiving STA may perform a MIC check on the trigger frame based on the corresponding key. Otherwise, the receiving STA may perform a MIC check on the trigger frame based on a key (e.g., a PTK) previously shared with the transmitting STA.

Next, in the case of a group addressed trigger frame, a MIC value may be calculated/checked as follows.

A transmitting STA may generate an IGTK or a BIGTK during a 4-way handshake process and share the same with a receiving STA, and the transmitting STA and the receiving STA may calculate a MIC value by using a TK based on the corresponding IGTK or the corresponding BIGTK.

Alternatively, a transmitting STA may generate a GTK during a 4-way handshake process and share the same with a receiving STA, and the transmitting STA and the receiving STA may calculate a MIC value by using a TK based on the corresponding GTK.

Alternatively, a transmitting STA may generate a new GTK for a group addressed trigger frame during a 4-way handshake process and share the same with a receiving STA, and the transmitting STA and the receiving STA may calculate a MIC value by using a TK based on the corresponding new GTK. Herein, the new GTK may be referred to as a trigger broadcast GTK (TBGTK), and the transmitting STA may share the same value of the TBGTK with receiving STAs. That is, an AP may generate and share the same TBGTK with STAs associated with the AP. In addition, between the transmitting STA and the receiving STA, information on the TBGTK and information related to a cipher suite that may use the corresponding TBGTK may be shared through a new KDE for the TBGTK (for example, a TBGTK KDE).

If a receiving STA receives, from a transmitting STA, a key for protecting a trigger frame (e.g., a TBGTK), the receiving STA may perform a MIC check on the trigger frame based on the corresponding key. Otherwise, the receiving STA may perform a MIC check on the trigger frame based on a key (e.g., an IGTK or a BIGTK) previously shared with the transmitting STA.

### Embodiment 3

The present embodiment relates to a detailed method for performing protection (i.e., encryption and integrity checking) for a trigger frame based on the trigger frame construction proposed in the present disclosure.

First, when a trigger frame is a group addressed trigger frame, the trigger frame configuration proposed in the present disclosure may be used as in the following examples.

For example, in the case of the trigger frame construction described in Embodiment 1-1 (e.g., see FIG. 15), a transmitting STA and/or a receiving STA may perform encryption/decryption through CCMP and derive a MIC value for a common information field and a user information list field by using a GTK, an IGTK, a BIGTK, or a TBGTK.

As another example, in the case of the trigger frame construction described in Embodiment 1-2 (e.g., see FIG. 16), a transmitting STA and/or a receiving STA may perform encryption/decryption through GCMP and derive a MIC value for a common information field and a user information list field by using a GTK, an IGTK, a BIGTK, or a TBGTK.

As another example, in the trigger frame configuration described in Embodiment 1-3 (e.g., see FIG. 17), a transmitting STA and/or a receiving STA may perform encryption/decryption on the common information field through CCMP using a GTK, an IGTK, a BIGTK, or a TBGTK, and may derive a MIC value.

As another example, in the trigger frame configuration described in Embodiment 1-4 (e.g., see FIG. 18), a transmitting STA and/or a receiving STA may perform encryption/decryption on the common information field through GCMP using a GTK, an IGTK, a BIGTK, or a TBGTK, and may derive a MIC value.

As another example, in the trigger frame configuration described in Embodiment 1-5 (e.g., see FIG. 19), a transmitting STA and/or a receiving STA may perform encryption/decryption on the user information list field through CCMP using a GTK, an IGTK, a BIGTK, or a TBGTK, and may derive a MIC value.

As another example, in the trigger frame configuration described in Embodiment 1-6 (e.g., see FIG. 20), a transmitting STA and/or a receiving STA may perform encryption/decryption on the user information list field through GCMP using a GTK, an IGTK, a BIGTK, or a TBGTK, and may derive a MIC value.

Next, when a trigger frame is an individually addressed trigger frame, the trigger frame configuration proposed in the present disclosure may be used as in the following examples.

For example, in the case of the trigger frame construction described in Embodiment 1-1 (e.g., see FIG. 15), a transmitting STA and/or a receiving STA may perform encryption/decryption through CCMP and derive a MIC value for a common information field and a user information list field by using the above-described PTK or TPTK.

As another example, in the case of the trigger frame construction described in Embodiment 1-2 (e.g., see FIG. 16), a transmitting STA and/or a receiving STA may perform encryption/decryption through GCMP and derive a MIC value for a common information field and a user information list field by using the above-described PTK or TPTK.

As another example, in the trigger frame configuration described in Embodiment 1-3 (e.g., see FIG. 17), a transmitting STA and/or a receiving STA may perform encryption/decryption on the common information field through CCMP using the above-described PTK or TPTK, and may derive a MIC value.

As another example, in the trigger frame configuration described in Embodiment 1-4 (e.g., see FIG. 18), a transmitting STA and/or a receiving STA may perform encryption/decryption on the common information field through GCMP using the above-described PTK or TPTK, and may derive a MIC value.

As another example, in the trigger frame configuration described in Embodiment 1-5 (e.g., see FIG. 19), a transmitting STA and/or a receiving STA may perform encryption/decryption on the user information list field through CCMP using the above-described PTK or TPTK, and may derive a MIC value.

As another example, in the trigger frame configuration described in Embodiment 1-6 (e.g., see FIG. 20), a transmitting STA and/or a receiving STA may perform encryption/decryption on the user information list field through GCMP using the above-described PTK or TPTK, and may derive a MIC value

Protection for a trigger frame based on the schemes proposed in the present disclosure may be performed as follows.

With respect to example situations described below, it is assumed that a transmitting STA and one or more receiving STAs support use of a trigger frame over CCMP or GCMP through a protected trigger support (sub)field and/or share a configuration scheme of a CCMP/GCMP MPDU format of the trigger frame through a protected trigger mode (sub)field.

A receiving STA may construct AAD for a trigger frame based on information of a MAC header of an MPDU received from a transmitting STA (e.g., a Frame Control field, a Duration field, an RA field, a TA field, and the like). Thereafter, the receiving STA may perform decryption on an MSDU by using the corresponding AAD.

The receiving STA may obtain plaintext MPDU data, which is a result of performing decryption based on CCMP or GCMP using the AAD constructed for the trigger frame, and may obtain a MIC value based on the corresponding MPDU. In this case, the receiving STA may derive the MIC value by performing, in the same manner as the transmitting STA, an encryption procedure for the corresponding MPDU.

Thereafter, the receiving STA may compare the derived MIC value with a MIC value transmitted by the transmitting STA (e.g., MIC information included in a CCMP MPDU format or a GCMP MPDU format). If the two MIC values are identical, the receiving STA may follow information of the obtained plaintext MPDU. In contrast, if the two MIC values are not identical, the receiving STA may recognize that at least one piece of information in the obtained plaintext MPDU has been altered by a third STA (e.g., an attacking STA) or has been corrupted during transmission/reception, and may discard the corresponding MPDU

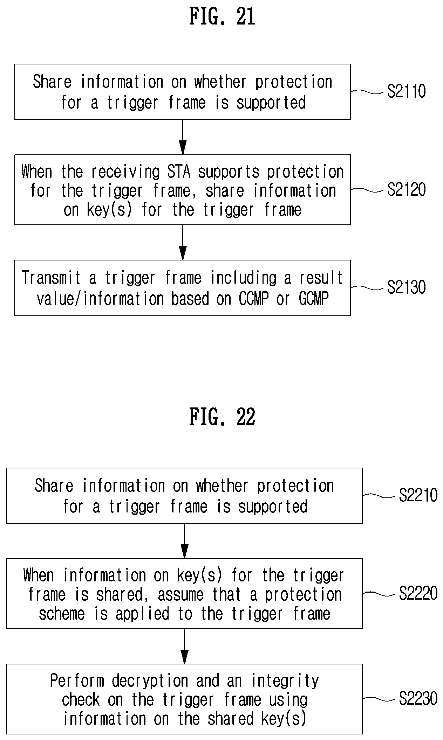

An operation of an STA supporting/performing protection for a trigger frame according to an embodiment of the present disclosure may be as illustrated in FIGS. 21 and 22.

FIG. 21 illustrates an operation of a transmitting STA supporting protection for a trigger frame according to the present disclosure.

Referring to FIG. 21, the transmitting STA may share, with a receiving STA, information regarding whether protection (e.g., encryption/decryption and integrity checking) for a trigger frame is supported (S2110).

In this case, when both the transmitting STA and the receiving STA(s) apply security to the trigger frame, the transmitting STA may generate and share key(s) used for integrity checking of the trigger frame (S2120). For example, according to a type of the trigger frame, the key(s) may include a key for an individually addressed frame (e.g., a PTK or a TPTK, collectively referred to as a PTK) or a key for a group addressed frame (e.g., a GTK, an IGTK, a BIGTK, or a TBGTK, collectively referred to as a GTK).

Based on the corresponding key(s), the transmitting STA may configure a trigger frame including a result value/information based on CCMP or GCMP (e.g., encrypted text), and may transmit the corresponding trigger frame to one or more receiving STAs (S2130).

In association with the above-described procedure, the transmitting STA may previously share/negotiate, with the receiving STA, information regarding in which format a CCMP/GCMP MPDU format is configured within the transmitted trigger frame, or may transmit the trigger frame including the corresponding information.

FIG. 22 illustrates an operation of a receiving STA supporting protection for a trigger frame according to the present disclosure.

Referring to FIG. 22, the receiving STA may share, with the transmitting STA, information regarding whether protection (e.g., encryption/decryption and integrity checking) for a trigger frame is supported (S2210).

In this case, when sharing key(s) used for integrity check of the trigger frame with the transmitting STA, the receiving STA may assume that a protection scheme has been applied to the trigger frame transmitted by the transmitting STA (S2220).

In this regard, the transmitting STA and the receiving STA may generate/negotiate/share identical key information (e.g., PTK/GTK, etc.) with each other through a key generation process, or key information generated by the transmitting STA may be delivered to the receiving STA.

For example, the receiving STA may receive a trigger frame transmitted from the transmitting STA and may recognize that CCMP or GCMP has been applied based on pre-shared key(s) and/or information related to a configuration scheme of a CCMP/GCMP MPDU format.

Based thereon, when the trigger frame is received, the receiving STA may perform decryption and integrity checking for the corresponding trigger frame by using pre-shared/generated/negotiated key(s) (e.g., a PTK, a GTK, or the like) (S2230).

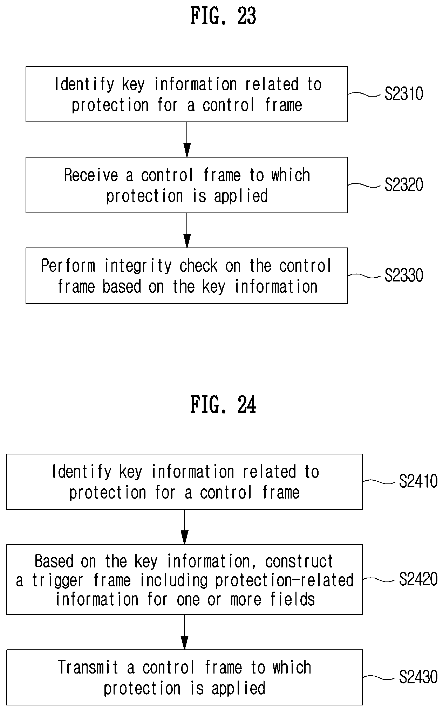

Hereinafter, FIGS. 23 and 24 illustrate operations performed by an STA according to the above-described proposed method of the present disclosure. In FIGS. 23 and 24, a second STA may correspond to an AP/transmitting STA, and a first STA may correspond to a non-AP STA/receiving STA associated with the AP.

FIG. 23 is a diagram for explaining an example of a method performed by a first STA according to the present disclosure.

Referring to FIG. 23, the first STA may identify key information related to protection of a control frame (S2310).

For example, the control frame may correspond to a trigger frame for triggering transmission/reception of a data frame with the second STA. In this case, key information related to protection of the control frame may be configured independently of key information for protecting data triggered by the corresponding control frame.

Here, protection of the control frame may be based on encryption/decryption and integrity checking using CCMP or GCMP as described above in the present disclosure.

In this regard, the first STA may negotiate/share/generate key information (related to the corresponding control frame) with a second STA in advance through a 4-way handshake process. Additionally or alternatively, the first STA may receive key information generated by the second STA.

For example, when the control frame corresponds to an individually addressed control frame, the key information may include a pairwise transient key (PTK) (e.g., a TPTK or the like) for the first STA and the second STA. In contrast, when the control frame corresponds to a group addressed control frame, the key information may include a group temporal key (GTK) (e.g., a TBGTK or the like) for the first STA and the second STA.

A first STA may receive, from a second STA, a control frame including encrypted information (e.g., one or more encrypted texts) based on a specific encryption protocol (S2320).

In this regard, the encrypted information may be configured based on encryption of any one of a common information field or a user information list field (e.g., one or more user information fields) in the control frame.

For example, the specific encryption protocol may correspond to the above-described CCMP or GCMP of the present disclosure. In this regard, CCMP-128 or CCMP-256 may be used as a cipher suite for CCMP, and GCMP-128 or GCMP-256 may be used as a cipher suite for GCMP.

Additionally, the control frame may include message integrity code (MIC) information calculated based on the above-described key information. In this case, when the specific encryption protocol corresponds to CCMP, encrypted information included in the control frame may be configured by additionally applying encryption to the MIC information.

That is, in the case of a CCMP-based encrypted control frame, a cipher text to which encryption is applied to a common information field and MIC information may be included, or a cipher text to which encryption is applied to a user information list field and MIC information may be included. For example, when the specific encryption protocol corresponds to CCMP and the above-described encrypted information is for the common information field, the encrypted information in the corresponding control frame may be composed of a plurality of encrypted texts (e.g., a first encrypted text and a second encrypted text of FIG. 17). As another example, when the specific encryption protocol corresponds to CCMP and the above-described encrypted information is for the user information list field, the encrypted information in the corresponding control frame may be composed of a single encrypted text (e.g., the encrypted text of FIG. 19)

Additionally, the control frame may include a CCMP header or a GCMP header including a first field for a Key identifier (Key ID) and a second field for a packet number. Here, the CCMP header or the GCMP header may further include information indicating an MPDU format (e.g., the MPDU format of FIGS. 15 to 20) according to a type of a specific encryption protocol within the corresponding control frame.

Thereafter, the first STA may perform decryption of the encrypted information and integrity checking of the control frame based on the identified key information (S2330).

Additionally or alternatively, in relation to the above-described procedure, information indicating whether protection for a control frame is supported may be transmitted and received between the first STA and the second STA. For example, information indicating whether protection for a control frame is supported may be transmitted and received through at least one of a frame in a discovery process (e.g., a beacon frame, a probe request frame, a probe response frame, etc.), a frame in an (re)association process (e.g., an (re)association request frame, an (re)association response frame, etc.), or the corresponding control frame.

Additionally or alternatively, in association with the above-described procedure, when the specific encryption protocol described above is applied to the control frame, a protected frame subfield within a Frame Control field included in the control frame may be set to a predefined specific value (e.g., 1).

Additionally or alternatively, in association with the above-described procedure, information indicating an MPDU format (e.g., the MPDU format of FIGS. 15 to 20) according to a type of a specific encryption protocol may be transmitted/received in advance between the first STA and the second STA.

The method described in the example of FIG. 23 may be performed by the first device (100) of FIG. 1. That is, the first STA of FIG. 23 may be implemented as the first device (100). For example, one or more processors (102) of the first device (100) of FIG. 1 may be configured to identify key information related to protection of a control frame, receive, from a second STA, a control frame including encrypted information based on a specific encryption protocol, and perform decryption of the encrypted information and integrity checking of the control frame based on the key information.

In this regard, the one or more processors (102) may recognize whether a received trigger frame has security applied thereto based on decoded data and information previously shared with a transmitting STA (e.g., a PTK/GTK for performing encryption/decryption, which encryption/decryption algorithm is to be used, which field is to be encrypted/decrypted, and the like), and may perform decryption and integrity checking by applying CCMP or GCMP. As a specific example, the one or more processors (102) may parse a MAC frame obtained through PHY decoding of a DATA field of a PPDU received through one or more transceivers (106). The one or more processors (102) may obtain plaintext and a MIC value by applying CCMP or GCMP to a cipher text portion of the parsed MAC frame, and may perform integrity checking by comparing the MIC value with a MIC value transmitted by the transmitting STA.

Furthermore, one or more memories (104) of the first device (100) may store instructions for performing the method described in the example of FIG. 23 or in examples described below when executed by the one or more processors (102).

FIG. 24 is a diagram for explaining an example of a method performed by a second STA according to the present disclosure.

Referring to FIG. 24, the second STA may identify key information related to protection of a control frame (S2410).

Here, protection of the control frame may be based on encryption/decryption and integrity checking using CCMP or GCMP as described above in the present disclosure.

Thereafter, the second STA may configure a trigger frame including encrypted information based on the corresponding key information and a specific encryption protocol (S2420).

In this regard, the encrypted information may be configured based on encryption of any one of a common information field or a user information list field (e.g., one or more user information fields) in the control frame.

Thereafter, the second STA may perform decryption of the encrypted information and integrity checking of the control frame based on the corresponding key information (S2430).

In this regard, specific matters related to protection of the control frame, key information, a specific encryption protocol, encrypted information, a frame/MPDU format, and the like are the same as or similar to those described with reference to FIG. 23, and thus detailed description thereof is omitted.

The method described in the example of FIG. 24 may be performed by the second device (200) of FIG. 1. That is, the second STA of FIG. 24 may be implemented as the second device (200). For example, one or more processors (202) of the second device (200) of FIG. 1 may be configured to identify key information related to protection of a control frame, configure a control frame including encrypted information based on the key information and a specific encryption protocol, and transmit the configured control frame to the first STA.

In this regard, the one or more processors (202) may be configured to perform an operation of configuring a CCMP/GCMP MPDU format by applying CCMP or GCMP to a trigger frame based on information shared with a receiving STA before configuring a PPDU (e.g., a PTK/GTK for performing encryption/decryption, which encryption/decryption algorithm is to be used, which field is to be encrypted/decrypted, and the like).

Furthermore, one or more memories (204) of the second device (200) may store instructions for performing the method described in the example of FIG. 24 or in examples described below when executed by the one or more processors (202).

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method performed by a first station (STA) in a wireless local area network (WLAN) system, the method comprising:
identifying key information related to protection of a control frame;
receiving, from a second STA, a control frame including encrypted information based on a specific encryption protocol; and
based on the key information, performing decryption of the encrypted information and integrity checking of the control frame,
wherein the encrypted information is configured based on encryption of any one of a common information field and an user information list field within the control frame.

2. The method of claim 1,
wherein the specific encryption protocol corresponds to counter mode with cipher-block chaining message authentication code protocol (CCMP) or galois/counter mode protocol (GCMP),
wherein, as a cipher suite for the CCMP, CCMP-128 or CCMP-256 is used, and
wherein, as a cipher suite for the GCMP, GCMP-128 or GCMP-256 is used.

3. The method of claim 1,
wherein the control frame includes message integrity code (MIC) information calculated based on the key information.

4. The method of claim 3,
wherein, based on that the specific encryption protocol corresponds to CCMP, the encrypted information is configured by additionally applying encryption to the MIC information.

5. The method of claim 4,
wherein, based on that the specific encryption protocol corresponds to CCMP and that the encrypted information is for the common information field, the encrypted information in the control frame is composed of a plurality of encrypted texts.

6. The method of claim 3,
wherein, based on that the specific encryption protocol corresponds to GCMP and that the encrypted information is for the user information list field, the encrypted information in the control frame is composed of a single encrypted text.

7. The method of claim 1,
wherein the control frame includes a CCMP header or a GCMP header including a first field for a Key identifier (ID) and a second field for a packet number.

8. The method of claim 7,
wherein the CCMP header or the GCMP header further includes information indicating a MAC protocol data unit (MPDU) format according to a type of the specific encryption protocol within the control frame.

9. The method of claim 1,
wherein information indicating whether protection of the control frame is supported is transmitted and received between the first STA and the second STA.

10. The method of claim 9,
wherein the information indicating whether protection of the control frame is supported is transmitted and received through at least one of a beacon frame, a probe request frame, a probe response frame, an association request frame, an association response frame, or the control frame.

11. The method of claim 1,
wherein, based on that the specific encryption protocol is applied to the control frame, a protected frame subfield within a frame control field included in the control frame is set to a predefined specific value.

12. The method of claim 1,
wherein information indicating a MAC protocol data unit (MPDU) format according to a type of the specific encryption protocol is transmitted and received between the first STA and the second STA.

13. The method of claim 1,
wherein, based on that the control frame corresponds to an individually addressed control frame, the key information is based on a pairwise transient key (PTK) for the first STA and the second STA, and
wherein, based on that the control frame corresponds to a group addressed control frame, the key information is based on a group temporal key (GTK) for the first STA and the second STA.

14. The method of claim 1,
wherein the control frame corresponds to a trigger frame for triggering data transmission/reception with the second STA, and
wherein the key information is configured independently of key information for protection of the data.

15. The method of claim 1,
wherein the second STA is an access point (AP), and
wherein the first STA is a non-AP STA associated with the AP.

16. A first station (STA) device in a wireless local area network (WLAN) system, the STA comprising:
at least one transceiver; and
at least one processor connected to the at least one transceiver,
wherein the at least one processor is configured to:
identify key information related to protection of a control frame;
receive, from a second STA, a control frame including encrypted information based on a specific encryption protocol; and based on the key information, perform decryption of the encrypted information and integrity checking of the control frame,
wherein the encrypted information is configured based on encryption of any one of a common information field and an user information list field within the control frame.

17. A method performed by a second station (STA) in a wireless local area network (WLAN) system, the method comprising:
identifying key information related to protection of a control frame;
constructing a control frame including encrypted information based on the key information and a specific encryption protocol; and
transmitting the control frame to a first STA, receiving from a second STA,
wherein the encrypted information is configured based on encryption of any one of a common information field and an user information list field within the control frame.

18. A second station (STA) device in a wireless local area network (WLAN) system, the STA comprising:
at least one transceiver; and
at least one processor connected to the at least one transceiver,
wherein the at least one processor is configured to:
identify key information related to protection of a control frame;
construct a control frame including encrypted information based on the key information and a specific encryption protocol; and
transmit the control frame to a first STA, receive from a second STA,
wherein the encrypted information is configured based on encryption of any one of a common information field and an user information list field within the control frame.

19. A processing device configured to control a station (STA) in a wireless local area network (WLAN) system, the processing device comprising:
at least one processor; and
at least one computer memory operatively connected to the one or more processors and storing instructions that, when executed by the at least one processor, perform a method according to any one of claims 1 to 15.

20. At least one non-transitory computer-readable medium storing one or more commands,
wherein the one or more commands are executed by one or more processors to control a device in a wireless LAN system to perform a method according to any one of claims 1 to 15.
